# EUROPÄISCHE PATENTSCHRIFT

(11) **EP 1 094 274 B1**
(45) Veröffentlichungstag und Bekanntmachung des Hinweises auf die Patenterteilung: **22.12.2004**
(21) Anmeldenummer: 00120808.1
(22) Anmeldetag: 23.09.2000
(51) Int. Cl.: F23J 13/02, F16L 58/10

(54) **Abgasabführung für Verbrennungsanlagen, insbesondere Abgas-Rohrleitungssysteme mit Innen- und Abgasrohr aus Aluminiumlegierung für eine Dachdurchführung**
Combustion apparatus flue gas discharge, in particular system of flue gas pipes for a roof lead-through with internal pipe and flue gas pipe made of aluminium alloy
Evacuation de gaz de fumée pour appareils de combustion, en particulier système de tuyau d'évacuation de gaz pour une traversée de toit avec conduite intérieure et conduite de fumée en alliage d'aluminium

(30) Priorität: 22.10.1999 DE 19950998
(43) Veröffentlichungstag der Anmeldung: 25.04.2001
(73) Patentinhaber: ROBERT BOSCH GMBH, 70442 Stuttgart (DE)
(72) Erfinder: Schubert, Joachim, 73240 Wendlingen (DE); Grueninger, Heinz, 73773 Aichwald (DE)

(56) Entgegenhaltungen:
- EP-A- 0 171 504
- DE-A- 3 703 915
- FR-A- 2 331 945
- FR-A- 2 601 112
- FR-A- 2 688 862
- US-A- 2 679 867

## Beschreibung

### Stand der Technik

Die Erfindung betrifft eine Abgasabführung für Verbrennungsanlagen, insbesondere Abgas-Rohrleitungssysteme mit Innen- und Abgasrohr aus Aluminiumlegierung für verschiedene Dachdurchführungen.

Für die Abgasabführung von Verbrennungsanlagen werden Abgas-Rohrleitungssysteme verwendet, bei dem Innenrohr und Abgasrohr aus Aluminiumlegierung, z. B. AIMG Si 0,5, bestehen, wobei innen- und Außenrohr einen koaxialen Bereich und das Abgasrohr allein einen Endbereich des Abgas-Rohrleitungssystems bilden können. Handelt es sich um ein raumluftunabhängiges Verbrennungsgerät, dann sind Innen- und Abgasrohr koaxial in einem Luftrohr geführt, wobei die Verbrennungsluft in dem Zwischenraum zwischen Luft- und Abgasrohr zugeführt wird.

Gerade beim Verwenden eines derartigen Abgas-Rohrleitungssystems als Dachdurchführung sind beträchtliche Rohrlängen erforderlich, in denen das Abgas teilweise unter den Taupunkt von ca. 60° C fällt. Das Abgas kondensiert und schlägt sich als Film auf der Innenwandung von Innen- und Abgasrohr nieder. Das Verbrennungsgas, insbesondere Erdgas, enthält Schwefel und bei der Verbrennung des Erdgases entsteht mit dem Luftstickstoff der Verbrennungsluft zudem Stickoxid NOx. Diese Elemente und die Verbindungen bilden mit dem Kondensat des Abgases HNO₂, HNO₃, H₂SO₃, H₂SO₄, so dass sich mit dem Material des Innen- und Abgasrohres Aluminiumoxid Al₂O₃ bilden kann, das sich auf der Innenwandung des Innen- und Abgasrohres niederschlägt.

Tritt in dem Abgas-Rohrleitungssystem ein Überdruck auf, dann löst sich das Aluminiumoxid von der Innenwandung des Innen- und Abgasrohres, wird aus dem Abgas-Rohrleitungssystem ausgeblasen und schlägt sich rund um die Dachdurchführung als weisser Belag auf den Dachziegeln nieder. Durch Regen entsteht jedoch keine Selbstreinigung des Daches, da der Niederschlag fest auf den Dachziegeln haftet. Es ist daher nicht auszuschließen, dass die Dachziegel teilweise von Zeit zu Zeit zu erneuern sind.

Aus FR 2 601 112 A ist bereits eine Abgasführung für Verbrennungsanlagen bekannt, die aus Aluminium besteht und deren Innenwand mit einer Schutzschicht versehen ist.

Aus US 2,679,867 A ist eine Abgasführung bekannt, die ein doppelwandiges Abgas-Rohrleitungssystem aufweist, das aus Teilstücken zusammengesetzt ist. Die doppelwandigen Teilstücke sind mittels einer Steckverbindung miteinander verbunden, wobei sich zwischen den Teilstücken eine Stoßstelle ausbildet.

Aufgabe der vorliegenden Erfindung ist es, eine Abgasführung mit einem doppelwandigen Abgas-Rohrleitungssystem aus Aluminium für eine Dachdurchführung zu schaffen, deren Innenwandung geschützt ist, um eine Bildung und dadurch ein Ausblasen von Aluminiumoxid aus dem Abgas-Rohrleitungssystem auf einfache Art zu verhindern.

Diese Aufgabe wird mit den kennzeichnenden Merkmalen des Anspruchs 1 gelöst. Dadurch, dass sich die Schutzschichten von Innenrohr und Abgasrohr über die Stoßstelle vom koaxialen Bereich zum Endbereich des Abgas-Rohrleitungssystems erstrecken und einen dichten Übergang bilden, ist auch der Übergang von dem koaxialen Bereich zum Endbereich des Abgas-Rohrleitungssystems eindeutig geschützt.

Die auf den Innenwandungen von Innenrohr und Abgasrohr aufgebrachten Schutzschichten unterbinden jede chemische Reaktion der im Abgas entstehenden und vorhandenen Elemente und Verbindungen mit dem Material des Abgas-Rohrleitungssystems. Auf diese Weise wird gewährleistet, dass sich überhaupt kein Aluminiumoxid in der Abgasführung bilden kann. Aufgrund von Überdruck kann auch kein Aluminiumoxid aus der Abgasführung ausgeblasen werden und sich auf den Dachziegeln um die Dachdurchführung niederschlagen.

Als besonders einfach und dennoch wirksam hat sich eine Ausführung erwiesen, die dadurch gekennzeichnet ist, dass als Schutzschicht eine Beschichtung mit Epoxid-Einbrennlack verwendet ist.

Ist die Abgasabführung für ein raumluftunabhängiges Verbrennungsgerät vorgesehen, dann ist die Ausgestaltung des Abgas-Rohrleitungssystems so erweitert, dass das Abgas-Rohrleitungssystem im koaxialen Bereich und Endbereich koaxial in einem Luftrohr geführt ist, wobei das Luftrohr mittels Abstandhalter und dem Abgasrohr verbunden ist.

Die Festlegung des Innenrohres im Abgasrohr des koaxialen Bereiches des Abgas-Rohrleitungssytems erfolgt nach einer Ausgestaltung dadurch, dass das Innenrohr im koaxialen Bereich des Abgas-Rohrleitungssystems dem Endbereich desselben zugekehrt mittels Steck- und/oder Rastverbindungen mit dem Abgasrohr verbunden ist.

Die Erfindung wird anhand eines im Schnitt dargestellten Ausführungsbeispiels eines Teils des Abgas-Rohrleitungssytems am Übergang vom koaxialen Bereich zum Endbereich näher erläutert.

Der linke Teil des Schnittes zeigt den Aufbau des Abgas-Rohrleitungssystems im koaxialen Bereich der Abgasabführung, während im rechten Teil des Schnittes der Aufbau des Endbereiches des Abgas-Rohrleitungssystems einer Dachdurchführung zu erkennen ist. Dabei erstreckt sich ein Luftrohr 30 koaxial über das Abgasrohr 20 und bildet eine Luftführung für die Verbrennungsluft. Dabei kann das Luftrohr 30 nicht bis zum freien Ende des Abgasrohres 20 geführt sein. Das Luftrohr 30 ist mittels Abstandhalter 40 fest mit dem Abgasrohr 20 verbunden, wie die Nietverbindungen 41 und 42 erkennen lassen.

Im koaxialen Bereich der Abgasabführung steckt in dem Abgasrohr 20 ein Innenrohr 10. Das dem Endbereich der Abgasabführung zugekehrte Ende des Innenrohres 10 ist mittels Steck- und/oder Rastverbindung im Abgasrohr 20 gehalten, wie die rillenartig verformten Teile der beiden Rohre zeigen.

Die Innenwandung 11 des Innenrohres 10 ist mit einer Schutzschicht 12 versehen, während auf der Innenwandung 21 des Abgasrohres 20 nur im Endbereich eine Schutzschicht 22 aufgebracht ist. Wesentlich ist, dass sich die Schutzschicht über den Übergang vom koaxialen Bereich zum Endbereich der Abgasabführung erstreckt, so dass auch dieser geschützt ist.

Die Schutzschicht wird so ausgewählt, dass sie das Innenrohr 10 und das Abgasrohr 20 in den abgedeckten Bereichen ihrer Innenwandungen 11 und 21 gegen die im Abgas auftretenden und entstehenden Elemente und Verbindungen resistent sind und eine chemische Reaktion mit dem Aluminium des Innenrohres 10 und des Abgasrohres 20 verhindern. Es kann sich dann in der Abgasabführung kein Aluminiumoxid bilden und auf den Innenwandungen 11 und 21 vom Innenrohr 10 und Abgasrohr 20 festsetzen. Ein Ausblasen von Aluminiumoxid aus der Dachdurchführung mit den auf die Dachziegel schädlichen Einwirkungen ist damit sicher verhindert.

Als besonders einfach und wirksam als Schutzschicht hat sich eine Beschichtung mit Epoxid-Einbrennlack erwiesen.

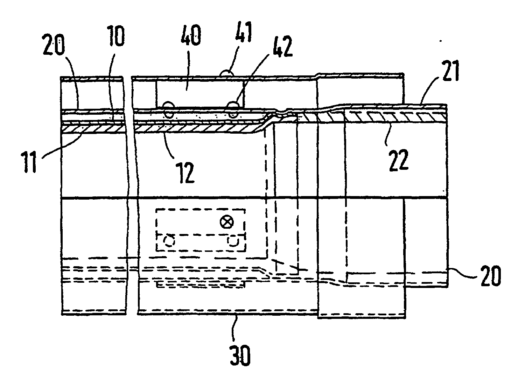

## Patentansprüche

1. Abgasführung mit einem Abgas-Rohrleitungssystem für Verbrennungsanlagen mit einem Innen- und Abgasrohr (10, 20) aus Aluminiumlegierung für verschiedene Dachdurchführungen, wobei in einem koaxialen Bereich im Abgasrohr (20) das Innenrohr (10) steckt, **dadurch gekennzeichnet, dass** die Innenwandung (11) von Innenrohr (10) und Abgasrohr (20) mit einer Schutzschicht versehen ist, die sich über eine Stoßstelle vom koaxialen Bereich zum Endbereich des Abgas-Rohrleitungssystems erstreckt und einen dichten Übergang bildet, und dass die Schutzschicht (12, 22) aus einem Material besteht, das gegen die beim Verbrennen und Kondensieren entstehenden Bestandteile (HNO₂, HNO₃, H₂SO₃, H₂SO₄) im Abgas resistent ist und eine Bildung von Aluminiumoxid (Al₂O₃) mit dem Material des Innen- und Abgasrohres (10, 20) verhindert.

2. Abgasabführung nach Anspruch 1, **dadurch gekennzeichnet, dass** als Schutzschicht (12, 22) eine Beschichtung mit Epoxid-Einbrennlack verwendet ist.

3. Abgasabführung nach Anspruch 1, **dadurch gekennzeichnet, dass** das Abgas-Rohrleitungssystem im koaxialen Bereich und Endbereich koaxial in einem Luftrohr (30) geführt ist, wobei das Luftrohr (30) mittels Abstandhalter (40) mit dem Abgasrohr (20) verbunden ist.

4. Abgasabführung nach Anspruch 1, **dadurch gekennzeichnet, dass** das Innenrohr (10) im koaxialen Bereich des Abgas-Rohrleitungssystems dem Endbereich desselben zugekehrt mittels Steck- und/oder Rastverbindung mit dem Abgasrohr (20) verbunden ist.

## Claims

1. Flue gas discharge having a system of flue gas pipes for combustion apparatus, having an internal and flue gas pipe (10, 20) made from aluminium alloy for different roof lead-throughs, the internal pipe (10) fitting into a coaxial region in the flue gas pipe (20), **characterized in that** the inner wall (11) of internal pipe (10) and flue gas pipe (20) is provided with a protective layer which extends via an abutment location from the coaxial region to the end region of the system of flue gas pipes and forms a sealed transition, and **in that** the protective layer (12, 22) consists of a material which is resistant to the constituents (HNO₂, HNO₃, H₂SO₃, H₂SO₄) formed in the flue gas during combustion and condensing and prevents the formation of aluminium oxide (Al₂O₃) with the material of the internal pipe and flue gas pipe (10, 20).

2. Flue gas discharge according to Claim 1, **characterized in that** the protective layer (12, 22) used is a coating with epoxy stoving enamel.

3. Flue gas discharge according to Claim 1, **characterized in that** the system of flue gas pipes, in the coaxial region and end region, is routed coaxially in an air pipe (30), the air pipe (30) being connected to the flue gas pipe (20) by means of spacers (40).

4. Flue gas discharge according to Claim 1, **characterized in that** the internal pipe (10), in the coaxial region of the system of flue gas pipes, facing the end region thereof, is connected to the flue gas pipe (20) by means of plug-fit and/or latching connection.

## Revendications

1. Évacuation de gaz de fumées comportant un système de tuyaux de gaz de fumées pour des installations de combustion comprenant un tuyau intérieur et un tuyau extérieur (10, 20) de fumées en un alliage d'aluminium pour différentes traversées de toits, et le tuyau intérieur (10), étant engagé dans la zone coaxiale du tuyau de fumée (20)
**caractérisée en ce que**
la paroi intérieure (11) du tuyau intérieur (10) et du tuyau extérieur (20) est munie d'une couche protectrice couvrant la jonction de la zone coaxiale avec la zone d'extrémité du système de tuyaux de fumées et forme un passage étanche,
la couche protectrice (12, 22) étant une matière résistant aux composants (HNO₂, HNO₃, H₂SO₃, H₂SO₄) formés par la combustion et la condensation dans les fumées pour éviter la formation d'oxyde d'aluminium (Al₂O₃) avec la matière des tuyaux intérieur et extérieur (10, 20).

2. Évacuation de fumées selon la revendication 1,
**caractérisée en ce que**
la couche protectrice (12, 22) est un revêtement d'un vernis époxyde cuit.

3. Évacuation de fumées selon la revendication 1,
**caractérisée en ce que**
le système de tuyaux de fumées est guidé dans la zone coaxiale et dans la zone d'extrémité, coaxialement à un tuyau d'air (30) lui-même relié aux tuyaux des fumées (20) par un organe d'écartement (40).

4. Évacuation de fumées selon la revendication 1,
**caractérisée en ce que**
le tuyau intérieur (10) est relié dans la zone coaxiale du système de tuyaux de fumées, dans la zone d'extrémité de celui-ci, à l'aide d'une liaison par enfichage et/ou par enclipsage avec le tuyau extérieur (20).
